# EUROPEAN PATENT APPLICATION

(11) **EP 3 848 565 A1**
(43) Date of publication of application: **14.07.2021**
(21) Application number: 20150754.8
(22) Date of filing: 08.01.2020
(51) Int. Cl.: F02C 1/10, F02C 6/14, F02C 1/00, F03G 6/06, F24S 60/10

(54) **THERMAL POWER STATION AND METHOD FOR GENERATING ELECTRIC POWER IN A THERMAL POWER STATION**

(71) Applicant: Siemens Gamesa Renewable Energy GmbH & Co. KG, 20097 Hamburg (DE)
(72) Inventor: Eggers, Jan Rudolf, 21640 Hannover (DE)
(74) Representative: Aspacher, Karl-Georg

(57) **Abstract**

The invention relates to a thermal power station (1) comprising (a) at least one thermal energy storage (10) having a housing (11), a storage chamber (12) with heat storage material (13) inside the storage chamber (12) and a fluid inlet port (14) fluidically connected to the storage chamber (12) and a fluid outlet port (16) fluidically connected to the storage chamber (12), and (b) a Brayton cycle heat engine (20) comprising a gas turbine (21), a cooler (23) and a compressor (24) connected with each other by means of a closed cycle (26) containing a second working fluid (B), whereby (c) the Brayton cycle heat engine (20) further comprises a control unit arranged for operating the Brayton cycle heat engine (20) according to a Brayton cycle, (d) the gas turbine (21) is thermally coupled to the at least one thermal energy storage (10) by means of a first heat exchanger (25) and a first working fluid (A), the first working fluid (A) being different from the second working fluid (B), and (e) the gas turbine (21) is connected to a generator (30) for producing electrical power by means of the thermal energy from the thermal energy storage (10). The invention further relates to a method for generating electric power in a thermal power station (1).

## Description

The invention relates to a thermal power station and a method for generating electric power in a thermal power station.

A thermal power station in which a Rankine cycle steam engine is coupled with a thermal energy storage is known from the state of the art. However, the roundtrip efficiency of such a thermal power station is limited and it is desired to have a greater roundtrip efficiency.

Therefore, it is an object of the invention to provide a thermal power station having a greater roundtrip efficiency.

This object is solved by the subject-matter of the claims. In particular, the object is solved by a thermal power station according to claim 1 and a method for generating electric power according to claim 12. Further details of the invention unfold from the other claims as well as the description and the drawings. Thereby, the features and details described in connection with the thermal power station of the invention apply in connection with the method for generating electric power of the invention, so that regarding the disclosure of the individual aspects of the invention it is or can be referred to one another.

According to a first aspect of the invention, the object is solved by a thermal power station comprising (a) at least one thermal energy storage having a housing, a storage chamber with heat storage material inside the storage chamber and a fluid inlet port fluidically connected to the storage chamber and a fluid outlet port fluidically connected to the storage chamber, and (b) a Brayton cycle heat engine comprising a gas turbine, a heat exchanger, a cooler and a compressor connected with each other by means of a closed cycle containing a second working fluid, whereby (c) the Brayton cycle heat engine further comprises a control unit arranged for operating the Brayton cycle heat engine according to a Brayton cycle, (d) the gas turbine is thermally coupled to the at least one thermal energy storage by means of a first heat exchanger and a first working fluid, the first working fluid being different from the second working fluid, and (d) the gas turbine is connected to a generator for producing electrical power by means of the thermal energy from the thermal energy storage.

The inventor has found, that the thermal energy storage may store and release heat at higher temperatures than it is currently being used in a Rankine steam cycle, for example. Based on this, the inventor has found that the heat stored in a thermal energy storage may be particularly well utilized in a Brayton cycle heat engine. This is because the Brayton cycle may operate at much higher temperatures than the Rankine steam cycle, which is limited to operating temperatures of approximately T = 630 to 650 °C. In fact, the Brayton cycle may be operated at temperatures of up to T = 1000 °C to 1500 °C. Thereby, a greater roundtrip efficiency is achieved in the thermal power station according to the first aspect of the invention.

By means of the invention the thermal energy storage is provided with an improved discharging cycle to increase overall efficiency, because it has been found that the discharging efficiency is a limiting factor for the overall efficiency.

According to the invention, the generator produces electrical power by means of the thermal energy from the thermal energy storage. This means that the thermal energy from the thermal energy storage is used for producing the electrical power. However, it may be possible to provide measures to increase the production rate of electrical power. For example, an additional heater, e.g. an electrical heater, may be provided to heat the first working fluid and/or the second working fluid even further than possible only by means of the thermal energy storage. In such a case, the electrical power is produced by means of the thermal energy from the thermal energy storage and by means of the further measure, such as the additional energy supplied to the additional heater.

In the invention, the thermal energy storage is used for storing heat or in other words thermal energy. In the following a preferred design of the thermal energy storage is introduced in more detail.

Preferably the thermal energy storage may be a horizontal storage with the main fluid flow direction in horizontal direction. It comprises at least one fluid inlet port for receiving the first working fluid, which may be water, hot or cold steam, air, nitrogen or argon, for example, and at least one fluid outlet port for ejecting the first working fluid. The thermal energy storage further comprises a housing, preferably with insulation, comprising a storage chamber with heat storage material inside the housing.

The storage chamber may be substantially a space, cavity, excavation or - as previously said - a housing in which the heat storage material is located. Within the storage chamber a heat exchange between the working fluid and the heat storage material takes place. In order to provide an efficient heat exchange, the heat exchange chamber is preferably thermally insulated against the surroundings. The loss of thermal energy is reduced by the thermal insulation.

For a modified distribution of the working fluid within the storage, instead of a single inlet port or a single outlet port, a plurality of inlet ports and/or a plurality of outlet ports may be arranged in the thermal energy storage.

The housing of the thermal energy storage may be substantially in cuboid or cylindrical form. The storage may form a horizontal or vertical heat exchange chamber. The term "horizontal heat exchange chamber" implies a horizontal main (average) flow of the working fluid or heat transfer fluid through the chamber interior. The flow direction of the horizontal main flow is essentially parallel to the average surface of the earth. The horizontal direction is essentially a perpendicular direction to the direction of the gravity force which affects the heat transfer fluid. A horizontally oriented direction of the heat exchange flow can be achieved by lateral inlet openings and/or lateral outlet openings. The horizontal heat exchange chamber may comprise these openings in its side chamber boundaries.

In one first mode of operation, a charging mode and in particular a charging cycle, hot charging mode first working fluid will be provided via the fluid inlet port. After passing through the thermal energy storage and passing along the heat storage materials and thereby heating these heat storage materials, a cooler charging mode first working fluid is exhausted via the fluid outlet port.

In a second mode of operation, a discharging mode and in particular a discharging cycle, the direction of the first working fluid flow may be reverted, so that a cool discharging mode first working fluid is supplied to the opening which was introduced as fluid outlet port, now acting as a fluid inlet port. At the other end of the storage end, i.e. its hot end, hot discharging mode first working fluid is exhausted via the port that was previously introduced as fluid inlet port, therefore now acting as fluid outlet port.

Thus, in the charging mode the thermal energy storage may be charged with thermal energy by feeding a hot charging mode first working fluid, such as hot air, to the fluid inlet port. The hot charging mode first working fluid will flow through the thermal energy storage and thereby heat up the heat storage materials. The thereby cooled charging mode first working fluid leaves the storage via the fluid outlet port. After the charging is completed, the thermal heat storage may be left in a standstill period of hours or even days until the stored thermal energy is needed and discharged by feeding a cold discharging mode first working fluid, such as air, to the fluid inlet port or as explained before, in a reverse mode, to the port previously mentioned as fluid outlet port. After flowing through the thermal energy storage, the heated discharging mode first working fluid is ejected via the second port previously mentioned as fluid inlet port.

Preferably, the thermal insulation may comprise at least one, preferably at least two thermal insulation layers. The thermal insulation layer may comprise at least one thermal insulation material selected from the group consisting of ceramics, concrete, bricks, vermiculite, perlite, calcium silicate, microporous insulation material, chamotte, sinter, stones, foamed clay, mineral wool, mineral foam, mineral fibers, foam glass, foil, in particular plastic foil, and soil layer with filled ground or sand.

Thereby it is advantageous that the thermal insulation material comprises a density between 300 kg/m3 and 1.500 kg/m3, even though lower densities are possible, too. The function of the insulation is to prevent heat losses to the exterior and to prevent working fluid from exiting the storage at locations other than the inlet/outlet section.

The thermal energy storage is especially adapted for operation at high temperatures. Therefore, in a preferred embodiment, an operating temperature of the operating mode is selected from the range between 300 °C and 1500 °C, preferably selected from the range between 500 °C and 1300 °C, more preferably selected from the range between 600 °C and 1000 °C, 650 °C to 1000 °C and most preferably between 700 °C and 1000 °C. The operating temperature is the maximum temperature in the thermal energy storage achieved after charging of the thermal energy storage. A deviation of the temperature ranges is possible. In this context, very advantageous is an upper limit of the temperature range of 900 °C and most preferably an upper limit of the temperature range of 800 °C.

Preferably, the thermal energy storage is a sensible heat storage, a latent heat storage or a thermo-chemical heat storage. In a sensible heat storage, heat storage material such as concrete, sand, stones, slag, steel elements or liquids, for example molten salt, may be used for storing thermal energy. In a latent heat storage, heat storage material such as metal, metal alloys or silicon may be used, whereby the phase change is for storage of thermal energy. In a thermo-chemical heat storage, energy is stored in a thermo-chemical energy storage material via an endothermic reaction whereas energy can be released via an exothermic reaction.

Preferably, the heat storage material comprises sand and/or stones. The heat storage chamber may comprise multiple different heat storage materials. The stones can be natural stones or artificial stones. Mixtures thereof are possible, too. Artificial stones can consist of containers which are filled with heat storage material. Preferably, the stones comprise gravels (pebbles), rubbles and/or grit (splits). The artificial material comprises preferably clinkers, ceramics, steel or steel slack pellets. The stones may in particular be selected from the group of bricks, volcanic rocks, granites, basalts or ceramics provided as bulk material, for example. This can also be called pebble bed.

Further preferably, the heat storage material forms a channel system of heat exchange channels within the storage chamber. The thermal energy storage may form inside a kind of mesh network or a channel system of heat exchange channels embedded into the storage chamber such that the heat exchange flow of the working fluid or heat transfer fluid through the heat exchange channels causes the heat exchange between the heat storage elements and the first working fluid. The heat exchange channels can be formed by interspaces (gaps) of the heat storage material, e.g. between the stones. In addition, or alternatively, the heat storage material may be porous. Open pores of the heat storage material form the heat exchange channels. It is also possible to have an indirect heat exchange by providing additional heat exchange channels running through the heat storage material, e.g. piping.

Moreover, preferably, the fluid inlet port is connected to a diffusor section of the thermal energy storage and/or the fluid outlet is connected to a nozzle section of the thermal energy storage. The diffusor section evenly distributes the working fluid into the thermal storage and reduces the flow speed of the working fluid. The nozzle section increases flow speed and pressure of the working fluid leaving the thermal energy storage in the housing and forwards it to the fluid outlet port for ejection from the thermal energy storage.

In the invention, the gas turbine and generator of the thermal power station are used for generating electric power using the heat stored in the thermal energy storage. In the following a preferred design of the thermal power station is introduced in more detail.

It is preferred, that the second working fluid is CO₂. CO₂ has been found to be particularly suitable for the high temperatures of the heat storable in the thermal energy storage.

It is further preferred, that the second working fluid, in particular CO₂, is trans- or supercritical in the Brayton cycle. A working fluid is supercritical or in other words has a supercritical state when it is above its critical point. For CO₂ this means that it is above its critical temperature of T = 30,980 °C and above its critical pressure of p = 73,74 bar. In supercritical working fluids, distinct liquid and gas phases do not exist. A Brayton cycle operated with supercritical working fluid may be called a supercritical Brayton cycle. A working fluid is transcritical when it goes through subcritical and supercritical states in its thermodynamic cycle. A working fluid is in a subcritical state when it is kept below its critical temperature, yet kept in the liquid state and above its boiling point. A Brayton cycle operated with transcritical working fluid may be called a transcritical Brayton cycle. It has been found that such second working fluid is particularly suitable for the high temperatures of the heat storable in the thermal energy storage.

It is particularly preferred, that the Brayton cycle heat engine further comprises a second heat exchanger arranged between the turbine and the cooler in the closed cycle to heat the second working fluid after passing through the cooler by means of residual heat in the second working fluid after passing through the gas turbine. Thereby, the residual heat of the second working fluid may be efficiently cooled before passing through the cooler by means of the second heat exchanger and the cooled second working fluid may be preheated before entering the first heat exchanger and the gas turbine, whereby the roundtrip efficiency is further increased.

It is further preferred, that the Brayton cycle heat engine comprises at least two second heat exchangers and at least two compressors of the at least one compressor, whereby they are arranged such that the second working fluid after passing through the cooler is alternatingly compressed by means of one of the at least two compressors and heated by means of one of the at least two second heat exchangers. Thereby, the roundtrip efficiency is increased even further.

Moreover, it is preferred, that the thermal power station further comprises a Rankine cycle heat engine having a steam turbine or a further Brayton cycle heat engine being thermally coupled with the Brayton cycle heat engine such that they form a combined cycle. By connecting the Brayton cycle heat engine with the Rankine cycle heat engine or a further Brayton cycle heat engine, the roundtrip efficiency may further be improved.

Also, it is preferred, that the at least one thermal energy storage is connected to a renewable energy source. The renewable energy source may be a wind turbine, a solar energy plant or similar. Thereby, renewable energy may be stored as thermal energy in the thermal energy storage and efficiently obtained at a later time as electric power by means of the Brayton cycle heat engine.

Further, it is preferred, that the control unit is arranged to control the Brayton cycle heat engine in a way such that the second working fluid at the gas turbine is provided with a temperature of at least T = 700 °C, in particular at least T = 800 °C and moreover in particular at least T = 900 °C. At these high temperatures, which are made possible by means of the Brayton cycle heat engine, the roundtrip efficiency is particularly high.

According to a second aspect of the invention, the object mentioned in the beginning is solved by a method for generating electric power in a thermal power station according to the first aspect of the invention, whereby the method comprises the steps of: (a) heating the first working fluid in a charging mode, so that a heated charging mode first working fluid is obtained, (b) transporting the heated charging mode first working fluid to the fluid inlet port of the thermal energy storage, whereby thermal energy from the heated charging mode first working fluid is transferred to the heat storage material of the storage chamber, so that thermal energy is stored in the heat storage material, (c) transporting discharging mode first working fluid of a discharging mode to the fluid inlet port of the thermal energy storage, whereby the stored thermal energy from the heat storage material of the storage chamber is transferred to the discharging mode first working fluid, so that a heated discharging mode first working fluid is obtained, which exits the fluid outlet port of the thermal energy storage and the heat from the heated discharging mode first working fluid is transferred to the second working fluid by means of the first heat exchanger, and (d) producing electric power in the generator by means of driving the gas turbine with the second working fluid.

Thereby, at least the advantages of the thermal power station according to the first aspect of the invention are achieved by the method according to the second aspect of the invention as well.

It is preferred, that the second working fluid flows through the closed cycle according to the Brayton cycle. The Brayton cycle comprises a first step of compressing the second working fluid. This is performed by means of the at least one compressor and is an adiabatic process. The Brayton cycle further comprises a second step of heating the second working fluid. This is performed by means of the first heat exchanger and is an isobaric process. The Brayton cycle moreover comprises a third step of expanding the second working fluid. This is performed by means of the gas turbine and is an adiabatic process. Finally, the Brayton cycle comprises the fourth step of heat rejection. This is performed by means of the cooler in a closed cycle and is an isobaric process.

These four steps form the Brayton cycle, whereby the first step is repeated after the fourth step and all the steps are repeated in the order of their enumeration.

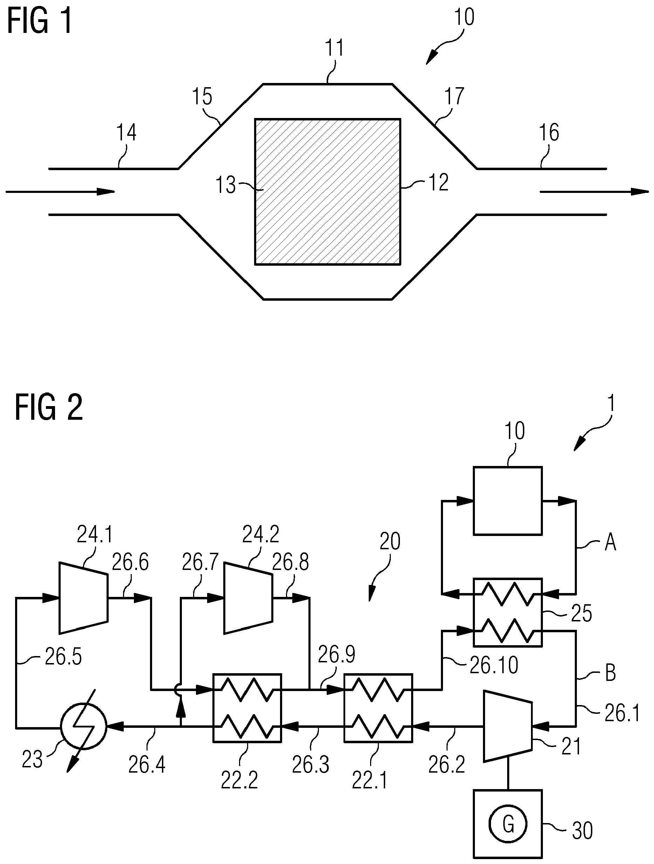

Further advantages, features and details of the invention unfold from the following description, in which by reference to drawings FIGS. 1 to 2 embodiments of the present invention are described in detail. Thereby, the features from the claims as well as the features mentioned in the description can be essential for the invention as taken alone or in an arbitrary combination. In the drawings, there is schematically shown:
- FIG. 1: a sectional cut through a thermal energy storage as can be used in a thermal power station according to the invention, and
- FIG. 2: a circuit diagram of a thermal power station according to an embodiment of the invention.

Same objects in FIGS. 1 to 2 are denominated with the same reference number. If there is more than one object of the same kind in one of the figures, the objects are numbered in ascending order with the ascending number of the object being separated from its reference number by a dot. The specific dimensions of features and parts in the figures are exemplary and may be enlarged for ease of reference only.

FIGURE 1 shows a sectional cut through a thermal energy storage 10 as can be used in a thermal power station 1 (see FIG. 2) according to the invention.

The thermal energy storage 10 comprises a housing 11, in which a storage chamber 12 filled with heat storage material 13 is located. A first working fluid A (see FIG. 2) may enter a fluid inlet port 14 of the housing 11 in the direction indicated by an arrow. The fluid inlet port 14 is connected to a diffusor section 15. The fluid inlet port 14 and the diffusor section 15 are formed by the housing 11. Further, the first working fluid A may exit the housing 11 in the direction indicated by a further arrow through a fluid outlet port 16. The fluid outlet port 16 is connected to a nozzle section 17. The fluid outlet port 16 and the nozzle section 17 are formed by the housing 11.

FIGURE 2 shows a circuit diagram of a thermal power station 1 according to an embodiment of the invention.

The thermal power station 1 comprises the thermal energy storage 10 and the Brayton cycle heat engine 20 coupled thermally with each other by means of the first heat exchanger 25.

A first working fluid A flows through a pipe taking in the heat from the thermal energy storage 10 and through the first heat exchanger 25, thereby transporting the heat from the thermal energy storage 10 to the first heat exchanger 25. For this purpose, a pipe from the first heat exchanger 25 is fluidically connected to the fluid inlet port 14 of the thermal energy storage 10 and a further pipe from the first heat exchanger 25 is fluidically connected to the fluid outlet port 16 of the thermal energy storage 10. In this particular embodiment, the first working fluid A may be air, for example.

A second working fluid B flows within a closed cycle 26 of the Brayton cycle heat engine 20 having several pipes 26.1, 26.2, 26.3, 26.4, 26.5, 26.6, 26.7, 26.8, 26.9, 26.10 and through the first heat exchanger 25. Thereby, the heat from the first working fluid A is exchanged with the second working fluid B being in a compressed state, whereby the second working fluid B becomes heated. The second working fluid B is supercritical CO₂ in this particular embodiment. The heating of the second working fluid B is a second step within the closed Brayton cycle of the Brayton cycle heat engine 20.

The second working fluid B is transported by means of the pipe 26.1 of the closed cycle 26 to a gas turbine 21 of the Brayton cycle heat engine 20. In the gas turbine 21, the second working fluid B being in the compressed state is expanded. This is a third step within the closed Brayton cycle. The gas turbine 21 is connected to a generator 30, whereby the gas turbine 21 by means of expanding the compressed and heated second working fluid B drives the generator 30, which in turn produces electric power.

The second working fluid B in the expanded state still has residual heat. Therefore, the second working fluid B passes through two second heat exchangers 22.1, 22.2 by means of the pipes 26.2, 26.3 of the closed cycle 26.

After the two second heat exchangers 22.1, 22.2, which are arranged in series, the second working fluid B is relatively cold and is further cooled in cooler 23 to which it is passed through by means of pipe 26.4. This is a fourth step of the Brayton cycle.

In the first step of the Brayton cycle, the cold second working fluid B is compressed by means of two compressors 24.1, 24.2 of the Brayton cycle heat engine 20 being arranged in series. For this purpose, a pipe 26.5 connects the cooler 23 with the compressor 24.1 and a pipe 26.7 connects the second heat exchanger 22.2 with the compressor 24.2. Thereby, the second working fluid B is passed before and after the cooler 23 to different compressors 24.1, 24.2, in which it is compressed. Thereby, the same compression of the second working fluid B may be achieved in every one of the two compressors 24.1, 24.2.

However, before passing through the first heat exchanger 25, the second working fluid B from pipe 26.6 coming from the compressor 24.1 is heated by means of the second heat exchanger 22.2 and by means of the second heat exchanger 22.1 and the second working fluid B from pipe 26.8 coming from the compressor 24.2 is heated by means of the second heat exchanger 22.1. Thereby a type of two-stage-preheating is provided. In pipe 26.9 arranged between the second heat exchangers 22.1, 22.2, the second working fluid B coming from the different compressors 24.1, 24.2 is mixed together. The preheated and compressed second working fluid B then passes through pipe 26.10 and to the first heat exchanger 25, where the second working fluid B once again undergoes the second step of the closed Brayton cycle.

## Claims

1. Thermal power station (1) comprising
(a) at least one thermal energy storage (10) having a housing (11), a storage chamber (12) with heat storage material (13) inside the storage chamber (12) and a fluid inlet port (14) fluidically connected to the storage chamber (12) and a fluid outlet port (16) fluidically connected to the storage chamber (12), and
(b) a Brayton cycle heat engine (20) comprising a gas turbine (21), a cooler (23) and a compressor (24) connected with each other by means of a closed cycle (26) containing a second working fluid (B),
whereby
(c) the Brayton cycle heat engine (20) further comprises a control unit arranged for operating the Brayton cycle heat engine (20) according to a Brayton cycle,
(d) the gas turbine (21) is thermally coupled to the at least one thermal energy storage (10) by means of a first heat exchanger (25) and a first working fluid (A), the first working fluid (A) being different from the second working fluid (B), and
(e) the gas turbine (21) is connected to a generator (30) for producing electrical power by means of the thermal energy from the thermal energy storage (10).

2. Thermal power station (1) according to claim 1,
**characterized in that,**
the thermal energy storage (10) is a sensible heat storage, a latent heat storage and/or a thermo-chemical heat storage.

3. Thermal power station (1) according to claim 1 or 2,
**characterized in that,**
the heat storage material (13) comprises sand and/or stones.

4. Thermal power station (1) according to any of the previous claims,
**characterized in that,**
the heat storage material (13) forms a tunnel system of heat exchange channels within the storage chamber (12).

5. Thermal power station (1) according to any of the previous claims,
**characterized in that,**
the second working fluid (B) is CO₂.

6. Thermal power station (1) according to any of the previous claims,
**characterized in that,**
the second working fluid (B) is transcritical or supercritical in the Brayton cycle.

7. Thermal power station (1) according to any of the previous claims,
**characterized in that,**
the Brayton cycle heat engine (20) further comprises a second heat exchanger (22) arranged between the turbine (21) and the cooler (23) in the closed cycle (26) to heat the second working fluid (B) after passing through the cooler (23) by means of residual heat in the second working fluid (B) after passing through the gas turbine (21).

8. Thermal power station (1) according to claim 7,
**characterized in that,**
the Brayton cycle heat engine (20) comprises at least two second heat exchangers (22) and at least two compressors (24) of the at least one compressor (24), whereby they are arranged such that the second working fluid (B) after passing through the cooler (23) is alternatingly compressed by means of one of the at least two compressors (24) and heated by means of one of the at least two second heat exchangers (22).

9. Thermal power station (1) according to any of the previous claims,
**characterized in that,**
the thermal power station (1) further comprises a Rankine cycle heat engine having a steam turbine or a further Brayton cycle heat engine (20) being thermally coupled with the Brayton cycle heat engine (20) such that they form a combined cycle.

10. Thermal power station (1) according to any of the previous claims,
**characterized in that,**
the at least one thermal energy storage (10) is connected to a renewable energy source.

11. Thermal power station (1) according to any of the previous claims,
**characterized in that,**
the control unit is arranged to control the Brayton cycle heat engine (20) in a way such that the second working fluid (B) at the gas turbine (21) is provided with a temperature of at least T = 700 °C.

12. Method for generating electric power in a thermal power station (1) according to any of the previous claims, whereby the method comprises the steps of:
(a) heating the first working fluid (A) in a charging mode, so that a heated charging mode first working fluid (A) is obtained,
(b) transporting the heated charging mode first working fluid (A) to the fluid inlet port (14) of the thermal energy storage (10), whereby thermal energy from the heated charging mode first working fluid (A) is transferred to the heat storage material (13) of the storage chamber (12), so that thermal energy is stored in the heat storage material (13),
(c) transporting discharging mode first working fluid (A) of a discharging mode to the fluid inlet port (14) of the thermal energy storage (10), whereby the stored thermal energy from the heat storage material (13) of the storage chamber (12) is transferred to the discharging mode first working fluid (A), so that a heated discharging mode first working fluid (A) is obtained, which exits the fluid outlet port (16) of the thermal energy storage (10) and the heat from the heated discharging mode first working fluid (A) is transferred to the second working fluid (B) by means of the first heat exchanger (25), and
(d) producing electric power in the generator (30) by means of driving the gas turbine (21) with the second working fluid (B).

13. Method for generating electric power in the thermal power station (1) according to claim 12,
**characterized in that,**
the second working fluid (B) flows through the closed cycle (26) according to the Brayton cycle.
